# EUROPEAN PATENT APPLICATION

(11) **EP 2 109 105 A1**
(43) Date of publication of application: **14.10.2009**
(21) Application number: 08007024.6
(22) Date of filing: 09.04.2008
(51) Int. Cl.: G11B 15/07, G11B 15/68, G11B 23/04, G11B 23/087

(54) **Testing device for magnetic tape cassettes with a passive RFID chip, comprising a reading device and an evaluation device, a reading device for RFID and for a barcode as well as magnetic tape cassettes with a passive RFID chip**

(71) Applicant: FUJIFILM Recording Media GmbH, 47533 Kleve (DE)
(72) Inventor: Hinkelmann, Manfred, 47546 Kalkar (DE)
(74) Representative: COHAUSZ DAWIDOWICZ HANNIG & SOZIEN

(57) **Abstract**

Disclosed is a testing device for magnetic tape cassettes with a passive RFID chip, comprising a reading device for RFID and for a barcode, which is arranged in a housing, whereby the magnetic tape cassette as well as the RFID and barcode scanner are arranged on top of the housing, and comprising an evaluation device for the data obtained from the RFID chip and/or barcode, a reading device for RFID and barcodes and a magnetic tape cassette with a RFID chip, as the test object of the testing device.

## Description

The present invention relates to a testing device for magnetic tape cassettes with a passive RFID chip, comprising a reading device and an evaluation device, a reading device for RFID and for a barcode as well as magnetic tape cassettes with a passive RFID chip.

Since no storage medium provides 100% data protection, not only digital media in the form of a CD-ROM or DVD but also primarily magnetic tape cassettes (data cartridges) are employed as back-up media for purposes of creating file back-ups or image back-ups by means of a streamer or other drive. Such tape backup systems generally operate malfunction-free and offer a high level of data protection if the backup is based on the grandfather-father-son principle.

Under unfavorable storage conditions or in case of severe stress on the magnetic tape cassettes, for instance, due to a streamer drive that is not optimally adjusted, a failure or total loss of data on a magnetic tape can occasionally occur, thus entailing the threat of data loss. Unfortunately, all that one is left with is the fact that there is no backup and one does not know the reason why the backup failed, be it due to a magnetic tape cassette that aged prematurely or due to a streamer drive that was not running true, or for other reasons.

Before this backdrop, it is desirable to provide a testing device for magnetic tape cassettes that already detects problems ahead of time before data loss occurs and that possibly already does so before the expiration date guaranteed by the manufacturer.

This objective is achieved by means of a special testing device in which a special test element is present that indicates irregularities in the magnetic tape cassette.

Therefore, the present invention relates to a testing device for magnetic tape cassettes with a passive RFID chip, comprising a reading device for RFID and for a barcode, which is arranged in a housing, whereby the magnetic tape cassette as well as the RFID and barcode scanner are arranged on top of the housing, and comprising an evaluation device for the data obtained from the RFID chip and/or barcode.

At the present time, magnetic tape cassettes used within the framework of data backup are tested directly by means of a software solution that is supplied along with the cassette drive being used. These software-based testing solutions, however, can only be used while the data is being backed up. The testing of the current condition of the magnetic data tape is relatively time-consuming and since the magnetic data cassette is used in the drive, it is subjected to mechanical stress. In contrast to this, the present testing device for magnetic tape cassettes entails the advantage that the test can be carried out much more quickly through the use of a device that operates outside of the tape drive and not only a query of the current condition can take place, but also a query of the target condition and a recommendation can be made pertaining to the service life of the tape. Moreover, the querying of this data is done contact-free, so that the magnetic tape cassette containing the data is not subjected to additional mechanical stress.

Unlike the commercially available barcode reading devices, the testing device according to the invention is not configured as a hand-held device, but rather, it is provided as a free-standing device onto which the magnetic tape cassette is placed.

In this process, the surface of the magnetic tape cassette on which the barcode as well as the RFID chip are installed is arranged at a specific distance and at a specific angular range relative to the sensor window behind which the reading device for the RFID and barcode is located in order to ensure that the data can be read out without problems.

The term magnetic tape cassette as defined by the present invention refers to magnetic tape cassettes of the type Linear Tape-Open (LTO) Ultrium of the first generation, having a typical capacity of 100 gigabytes (GB) (uncompressed) at a typical transfer rate of 10 to 20 megabytes/second (MB/sec) with 384 tape tracks, of the second generation having a capacity of 200 gigabytes (GB) (uncompressed) at a transfer rate of 20 to 40 megabytes/second (MB/sec) with 512 tape tracks, of the third generation having a capacity of 400 gigabytes (GB) (uncompressed) at a transfer rate of 40 to 80 megabytes/second (MB/sec) with 704 tape tracks, of the fourth generation having a capacity of 800 gigabytes (GB) (uncompressed) at a transfer rate of 120 megabytes/second (MB/sec) with 896 tape tracks, and of the fifth generation having a capacity of 1.6 terabytes (TB) at a transfer rate of 180 megabytes/second (MB/sec) as well as of the sixth generation having a capacity of 3.2 TB (uncompressed) at a transfer rate of up to 270 MB/sec. As an alternative, tapes of the AIT, ADR, DDS, DLT, Mammoth, QIC, SLR, Travan and VXA standards can be used.

According to another preferred embodiment of the present invention, the reading device has at least one holder for affixing the magnetic tape cassette next to the RFID and barcode scanner, whereby this holder preferably has one or more pins.

According to another preferred embodiment of the present invention, the reading device has at least one means to display the operational readiness and/or to show the transmission of the data read from the RFID chip via the RFID and barcode scanner to the evaluation device, said means preferably being in the form of LEDs.

According to another preferred embodiment, the magnetic tape cassette is arranged horizontally or vertically with its lengthwise or crosswise side next to the RFID and barcode scanner on the surface of the housing. This is always done in a way that the RFID chip arranged in the magnetic tape cassette is in direct contact with the reading device for the RFID chip and for the barcode.

According to a preferred embodiment of the present invention, the distance between the magnetic tape cassette and the reading device for the RFID and barcode is 3 cm to 80 cm, preferably 10 cm to 15 cm, relative to the surfaces of the components that face each other.

According to another preferred embodiment of the present invention, the barcode reader of the reading device is oriented at an angle of 10° to 15°, preferably about 11°, with respect to the barcode label on the magnetic tape cassette.

According to another preferred embodiment of the present invention, the RFID reading device reads the 13.56 MHz RFID standard and complies with ISO 14443 or ISO 15693.

According to another preferred embodiment of the present invention, the barcode reader reads a 1 D or 2D barcode, especially a 1 D barcode according to EAN, Code 39, Code 93 or Code 128 or a 2D barcode in the form of a stacked code such as Codablock or PDF417, a matrix code such as QR Code, Data-Matrix, MaxiCode, AztecCode, DotCode or a special code in the form of a composite code, hidden code or stochastic code.

According to another preferred embodiment of the present invention, the evaluation device has means to transmit the data read from the RFID chip and from the barcode to the evaluation device as well as a database to collect, process, edit, sort, select and output this transmitted data for each magnetic tape cassette, for each cassette drive used and the data backup system employed, as well as means to output the data on a data output device.

According to another preferred embodiment of the present invention, the collected data for each magnetic tape cassette for the cassette drive being used and the data backup system employed provide the history as well as the current status.

According to another preferred embodiment of the present invention, the collected data about a magnetic tape cassette contains the number of times the cassette has been loaded into a cassette drive, also data on the utilized capacity of the magnetic tape cassette, EOD (end of data) information, the date of manufacture and the ID of the magnetic tape cassette. EOD information in various classes is known, whereby EOD Class 3 indicates that written information has been lost. Aside from the number of times the cassette has been loaded into a cassette drive, the date of manufacture already provides information about when it is more probable that data loss will occur.

According to another preferred embodiment of the present invention, the collected data about a magnetic tape cassette also contains prognosis data on the service life of the magnetic tape cassette, which can usually be calculated from the above-mentioned written data as well as from data of the magnetic tape cassette itself. This limit was determined on the basis of test results for the given type of magnetic tape cassette. As soon as the limit of this service life is being approached, the system provides a warning as well as the appropriate recommendations well ahead of time.

According to another preferred embodiment of the present invention, the collected data pertaining to a magnetic tape cassette contains error messages for the magnetic tape cassette, especially error information that cannot be corrected, delayed writing information, fatally delayed writing information as well as reading/writing repeat information. The above-mentioned error messages indicate when the service life of a given magnetic tape cassette has been reached and data loss is likely to occur.

According to another preferred embodiment, the evaluation device is a data-processing system with connected data output devices, for instance, a monitor and/or printer, with an operating system, preferably on the basis of Windows or Linux, which runs a first application software for reading and transmitting the data received from the RFID chip and from the barcode, as well as a second application software for evaluating this data that also monitors the backup data and the data on the magnetic tape cassette for data loss and issues a warning prior to the occurrence of data loss.

Especially preferred is the use of a personal computer connected to data output devices or a notebook as the data-processing system.

Examples of typical operating systems are the Windows versions Windows 2000, Windows XP, Windows Vista and Linux.

The transmission software handles the reading of the data from the barcode scanner as well as the data stored in the RFID chip. This data is organized in special block systems and all of the data is transmitted to the data-processing system.

The evaluation software reads the current status and the historical data of each magnetic tape cassette for at least the last four months. The data received from the reading device as hexadecimal data is converted into a readable format. This data evaluates and outputs detailed information about the status of the magnetic tape cassette as well as about the cassette drive and about the backup system itself. Therefore, on the basis of clear instructions, the customer can immediately take countermeasures. The data of each magnetic tape cassette is stored in a database. The evaluation software also comprises a tracing system.

According to another preferred embodiment, the evaluation device, along with the output devices, is arranged in the housing of the reading device. This is done, for example, in such a way that at least one touch screen for data input and for data display is additionally arranged in the housing of the reading device.

According to another preferred alternative embodiment of the present invention, the reading device is physically separated from the evaluation device.

According to another preferred alternative embodiment of the present invention, the reading device is connected to the evaluation device either by means of a cable, preferably a cable with a USB port, preferably a USB2 port, a FireWire port or via a LAN cable, or else wirelessly, preferably employing WLAN, BlueTooth or infrared transmission technology.

According to another preferred embodiment, the present invention relates to a reading device for RFID and barcodes which is arranged in a housing, whereby a magnetic tape cassette is arranged next to the RFID and barcode scanner on top of the housing and which is an integral part of a testing device for magnetic tape cassettes with a passive RFID chip, as described above.

The present invention finally relates to a magnetic tape cassette with a passive RFID chip, whereby the passive RFID chip has a microprocessor and an antenna.

This RFID chip is preferably arranged on the inner wall of the magnetic tape cassette, preferably in one of the four corners, especially preferably, the RFID chip is arranged on the inside of the same side where the barcode is located on the outside.

The present invention will be elaborated upon on the basis of an embodiment.

A magnetic tape cassette having a capacity of 800 GB (uncompressed) on which backup data has been stored is arranged with its surface on which the barcode and the RFID chip are located at a distance of about 11 cm to 12 cm from an RFID and barcode scanner located behind the scanner window. The barcode reading device (barcode scanner) is a Symbol SE 955 Type 1 laser manufactured by Symbol Technology Inc. of Holtsville, N.Y., United States, and the RFID scanner is a Philips NXP Type RC 635 processor that can read the 13.56 MHz RFID standard. The barcode scanner reads the 1D barcode according to Code 39 and the RFID scanner reads the current status and the history of the magnetic tape cassette and transmits this data via a port having a USB connector to a notebook which is running the operating system Windows XP Professional, and in which the transmitted hexadecimal data is converted into a readable format. The evaluation software checks the transmitted data and indicates whether the backup procedure was successful and indicates the projected the service life of the magnetic tape cassette.

## Claims

1. A testing device for magnetic tape cassettes with a passive RFID chip, comprising a reading device for RFID and for a barcode, which is arranged in a housing, whereby the magnetic tape cassette as well as the RFID and barcode scanner are arranged on top of the housing, and comprising an evaluation device for the data obtained from the RFID chip and/or barcode.

2. The device according to Claim 1, **characterized in that** the reading device has at least one holder for affixing the magnetic tape cassette across from the RFID and barcode scanner.

3. The device according to Claim 1 or 2, **characterized in that** the reading device has at least one means to display the operational readiness and/or to show the transmission of the data read from the RFID chip via the RFID and barcode scanner to the evaluation device.

4. The device according to Claim 1 or 2, **characterized in that** the magnetic tape cassette is arranged horizontally or vertically with its lengthwise or crosswise side next to the RFID and barcode scanner on the top of the housing.

5. The device according to Claims 1 to 4, **characterized in that** the distance between the magnetic tape cassette and the reading device for the RFID and barcode is 3 cm to 80 cm, preferably 10 cm to 15 cm, relative to the surfaces of the components that face each other.

6. The device according to Claims 1 to 4, **characterized in that** the barcode reader of the reading device is oriented at an angle of 10° to 15°, preferably about 11°, with respect to the barcode label on the magnetic tape cassette.

7. The device according to Claims 1 to 6, **characterized in that** the RFID reading device reads the 13.56 MHz RFID standard and complies with ISO 14443 or ISO 15693.

8. The device according to Claims 1 to 6, **characterized in that** the barcode reader reads a 1 D or 2D barcode, especially a 1 D barcode according to EAN, Code 39, Code 93 or Code 128 or a 2D barcode in the form of a stacked code, a matrix code or a special code.

9. The device according to Claims 1 to 8, **characterized in that** the evaluation device has means to transmit the data read from the RFID chip and from the barcode to the evaluation device as well as a database to collect, process, edit, sort, select and output this transmitted data for each magnetic tape cassette, for each cassette drive used and the data backup system employed, as well as means to output the data on a data output device.

10. The device according to Claim 9, **characterized in that** the collected data for each magnetic tape cassette for the cassette drive being used and the data backup system employed provide the history as well as the current status.

11. The device according to Claim 9 or 10, **characterized in that** the collected data about a magnetic tape cassette contains the number of times the cassette has been loaded into a cassette drive, also data on the utilized capacity of the magnetic tape cassette, EOD (end of data) information, the date of manufacture and the ID of the magnetic tape cassette.

12. The device according to Claim 9 or 10, **characterized in that** the collected data about a magnetic tape cassette contains prognosis data on the service life of the magnetic tape cassette.

13. The device according to the preceding claims, **characterized in that** the collected data pertaining to a magnetic tape cassette contains error messages for the magnetic tape cassette, especially error information that cannot be corrected, delayed writing information, fatally delayed writing information as well as reading/writing repeat information.

14. The device according to Claim 9 to 13, **characterized in that** the evaluation device is a data-processing system with connected data output devices, for instance, a monitor and/or printer, with an operating system, preferably on the basis of Windows or Linux, which runs a first application software for reading and transmitting the data received from the RFID chip and from the barcode, as well as a second application software for evaluating this data that also monitors the backup data and the data on the magnetic tape cassette for data loss and issues a warning prior to the occurrence of data loss.

15. The device according to any of the preceding claims, **characterized in that** the evaluation device, along with the output devices, is arranged in the housing of the reading device.

16. The device according to any of the preceding claims, **characterized in that** the reading device is physically separated from the evaluation device.

17. The device according to Claim 16, **characterized in that** the reading device is connected to the evaluation device either by means of a cable, preferably a cable with a USB port, a FireWire port or via a LAN cable, or else wirelessly, preferably employing WLAN, BlueTooth or infrared.

18. A reading device for RFID and barcodes which is arranged in a housing, whereby a magnetic tape cassette is arranged next to the RFID and barcode scanner on top of the housing and which is an integral part of a testing device for magnetic tape cassettes with a passive RFID chip, especially according to Claims 1 to 17.

19. A magnetic tape cassette with a RFID chip, as the test object of the testing device according to any of Claims 1 to 18.
